# EUROPÄISCHE PATENTSCHRIFT

(11) **EP 2 945 775 B1**
(45) Veröffentlichungstag und Bekanntmachung des Hinweises auf die Patenterteilung: **02.11.2016**
(21) Anmeldenummer: 14700690.2
(22) Anmeldetag: 16.01.2014
(51) Int. Cl.: B23P 11/02, F01L 1/047, F16H 53/02, F16D 1/08, F16B 4/00

(54) **VORRICHTUNG ZUR MONTAGE VON EINEM VERBUND**
APPARATUS FOR ASSEMBLING A COMPOSITE ARRANGEMENT
DISPOSITIF DE MONTAGE D'UN COMPOSITE

(30) Priorität: 17.01.2013 DE 102013200638
(43) Veröffentlichungstag der Anmeldung: 25.11.2015
(73) Patentinhaber: Mahle International GmbH, 70376 Stuttgart (DE)
(72) Erfinder: BEERENS, Christoph, 70193 Stuttgart (DE); MENONNA, Antonio, 71254 Ditzingen (DE); PFIZENMAIER, Lothar, 73669 Lichtenwald (DE); SCHACHERER, Roland, 78187 Geisingen (DE)
(74) Vertreter: BRP Renaud & Partner mbB Rechtsanwälte Patentanwälte Steuerberater
(86) Internationale Anmeldenummer: PCT/EP2014/050808
(87) Internationale Veröffentlichungsnummer: WO 2014/111472

(56) Entgegenhaltungen:
- WO-A1-02/096596
- DE-A1-102004 049 272
- DE-A1-102007 056 638
- DE-A1-102008 064 194
- DE-A1-102009 060 350
- JP-A- 2000 073 709
- JP-A- 2002 028 827

## Beschreibung

Die vorliegende Erfindung betrifft eine Vorrichtung zur Montage von einem Verbund, bestehend aus mehreren eine Ausnehmung für eine Welle aufweisender Funktionselemente in einer vorbestimmten Winkelposition auf der Welle gemäß dem Oberbegriff des Anspruchs 1. Die Erfindung betrifft außerdem ein Verfahren zum thermischen Fügen einer Welle mit mehreren Funktionselementen.

Die JP 2000 073709 A offenbart eine Vorrichtung gemäß dem Oberbegriff des Anspruchs 1.

Aus der DE 10 2007 056 638 A1 ist eine gattungsgemäße Vorrichtung zur Montage von einem Verbund, bestehend aus mehreren eine Ausnehmung für eine Welle aufweisender Funktionselemente, insbesondere Nocken, Ausgleichsmassen, Zahnrädern und/oder Lager, in einer vorbestimmten Winkelposition auf der Welle, wobei die Vorrichtung mehrere für jeweils ein Funktionselement bestimmte Halteeinrichtungen aufweist.

Aus der DE 10 2008 064 194 A1 ist eine Vorrichtung zur Positionierung mehrerer eine Ausnehmung für eine Welle aufweisender Funktionselemente, insbesondere Nocken, in einer vorbestimmten Winkelposition auf der Welle bekannt, wobei die Vorrichtung mehrere für jeweils ein Funktionselement bestimmte Aufnahmen aufweist, die jeweils mit einer die Winkelposition des jeweiligen Funktionselements entsprechend der Winkelposition auf der Welle festgelegten Ausformung ausgestattet sind. Die Aufnahmen sind dabei derart positionierbar, dass die Ausnehmungen der Funktionselemente auf einer gemeinsamen horizontalen Geraden liegen.

Aus der DE 10 2009 060 350 A1 ist eine Vorrichtung zur Montage einer Funktionselemente tragenden Welle bekannt, wobei die Vorrichtung eine

Maschinenplattform umfasst, auf der eine Mehrzahl von Positionierscheiben zur fluchtenden, lagerichtigen Positionierung der Funktionselemente derart angeordnet, dass eine Welle einschiebbar ist. Die Positionierscheiben sind reversibel auf einem Rahmen fixiert, der seinerseits reversibel auf der Maschinenplattform fixiert ist. Dadurch soll durch Vorhalten mehrerer Rahmen ein schneller Wechsel eines Produktionsprozesses ermöglicht werden.

Die vorliegende Erfindung beschäftigt sich mit dem Problem, für eine Vorrichtung der gattungsgemäßen Art eine verbesserte Ausführungsform anzugeben, die insbesondere einen thermischen Fügevorgang vereinfacht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem ersten allgemeinen Gedanken, eine Vorrichtung zur Montage mehrerer eine Ausnehmung für eine Welle aufweisender Funktionselemente derart zu modifizieren, dass die einzelnen Funktionselemente in vertikaler Anordnung in der Vorrichtung angebracht sind, so dass ein thermisches Fügen einer Welle mit den Funktionselementen in vertikaler Richtung erfolgen kann. Durch das vertikale Fügen, beispielsweise das Einschieben der gekühlten Welle von oben in die vertikal übereinander angeordneten erhitzten Funktionselemente kann insbesondere auf eine bisher erforderliche aufwändige Führung der Welle verzichtet werden, da das Führen der Welle bereits von der Schwerkraft übernommen wird. Bei den aus dem Stand der Technik bekannten Vorrichtungen erfolgt ein Fügen der Welle mit den Funktionselementen stets in horizontaler Richtung, was ein häufiges und aufwändiges Abstützen der Welle während des Fügevorgangs erfordert. Die erfindungsgemäße Vorrichtung eignet sich insbesondere zum Fügen von Nocken, Ausgleichsmassen, Zahnrädern und/oder Lager in einer vordefinierten Winkelposition auf der Welle, wobei die Vorrichtung mehrere für jeweils zur Aufnahme eines Funktionselements bestimmte Halteeinrichtungen aufweist. Diese Halteeinrichtungen sind vertikal übereinander angeordnet, so dass die Ausnehmungen der Funktionselemente auf einer vertikalen Geraden liegen. Um die Vorrichtung generell besser warten zu können und leichter zugänglich zu gestalten, ist zum Erhitzen der Funktionselemente eine separat angeordnete Heizeinrichtung vorgesehen, wobei mit einer Greifeinrichtung zumindest zwei, vorzugsweise sämtliche, zu fügenden Funktionselemente gemeinsam aus der Heizeinrichtung entnehmbar und in die Halteeinrichtungen der Vorrichtung einlegbar sind. Die erfindungsgemäße Vorrichtung bietet somit den großen Vorteil, dass ein Erhitzen und ein Fügen der Funktionselemente an unterschiedlichen Orten erfolgt, wodurch die einzelnen Stationen weniger komplex und besser zugänglich und dadurch auch leichter zu warten sind.

Bei einer vorteilhaften Weiterbildung der Erfindung, sind die Halteeinrichtungen ausgebildet entweder als Aufnahmen, die jeweils mit einer die Winkelposition des jeweiligen Funktionselements entsprechend der Winkelposition auf der Welle festlegenden Ausformung ausgestattet sind, oder als Montagegreifer, die das jeweilige Funktionselement während dem Fügen fixieren. In die Aufnahmen können die Funktionselemente passgenau eingelegt werden, wogegen die Montagegreifer die Funktionselemente greifen und fixieren können. Selbstverständlich ist dabei denkbar, dass sowohl die Aufnahmen als auch die Montagegreifer justierbar und verstellbar sind, um Abweichungen der Ausrichtung der Funktionselemente zu kompensieren.

Zweckmäßig sind die Greifer der Greifeinrichtung und/oder die Montagegreifer zumindest teilweise aus einem induktiv nicht erwärmbaren Werkstoff, insbesondere aus Keramik, ausgebildet oder sogar aktiv kühlbar. Zusätzlich oder alternativ kann auch vorgesehen sein, dass die Heizeinrichtung Haltebalkone aufweist, auf welchen die zu erhitzenden Funktionselemente ablegbar sind, wobei die Haltebalkone zumindest teilweise aus einem induktiv nicht erwärmbaren Werkstoff, insbesondere aus Keramik, ausgebildet oder kühlbar sind. Durch den nicht induktiv erhitzbaren Werkstoff der Haltebalkone kann verhindert werden, dass sich diese beim Erhitzen der Funktionselemente ausdehnen und verziehen. In gleicher Weise ist es auch vorteilhaft, sofern die Greifer der Greifeinrichtung aus einem induktiv nicht erhitzbaren Material ausgebildet sind, da diese dann die Funktionselemente während des induktiven Erhitzens halten können, ohne dabei zu große Spannungen aufnehmen zu müssen.

Bei einer vorteilhaften Weiterbildung der erfindungsgemäßen Vorrichtung weist die Heizeinrichtung zumindest zwei unabhängig voneinander steuerbare Induktionsspulen auf. Mittels einer derartigen Heizeinrichtung kann ein individuelles Beheizen der Funktionselemente erreicht werden, so dass beispielsweise unterschiedliche Funktionselemente mit individuellem Heizbedarf in ein und derselben Heizeinrichtung erhitzt werden können.

Zweckmäßig weist die Vorrichtung eine Einrichtung zum Halten eines Lagerrahmens oder einer Zylinderkopfhaube auf. Hierdurch ist nicht nur die Fertigung einer Nockenwelle, sondern zugleich auch deren Einbau in einen Lagerrahmen oder eine Zylinderkopfhaube in nur einem einzigen Arbeitsschritt möglich.

Die Erfindung beruht weiter auf dem allgemeinen Gedanken, ein Verfahren zum thermischen Fügen einer Welle mit mehreren eine Ausnehmung für die Welle aufweisenden Funktionselementen, insbesondere Nocken, Ausgleichsmassen, Zahnrädern und/oder Lager, mittels einer zuvor beschriebenen Vorrichtung anzugeben, bei dem zumindest zwei Funktionselemente mit der Greifeinrichtung gemeinsam in die Heizeinrichtung eingelegt und darin erhitzt werden. Anschließend werden die zumindest zwei Funktionselemente mit der Greifeinrichtung gemeinsam aus der Heizeinrichtung entnommen und in die Halteeinrichtungen der Vorrichtung derart eingelegt werden, dass die Ausnehmungen der Funktionselemente auf einer gemeinsamen im Wesentlichen vertikalen Geraden liegen. Nun wird die Welle mittels eines vertikal verfahrbaren Führungsschlittens von oben durch die fluchtenden Ausnehmungen der Funktionselemente geschoben, wobei ein die Funktionselemente auf der Welle fixierender Temperaturausgleich abgewartet wird. Zuletzt wird die Welle samt darauf fixierter Funktionselemente aus der Vorrichtung entnommen. Durch den vertikalen Fügevorgang richtet sich die Welle aufgrund der Schwerkraft selbst aus und muss nicht aufwendig geführt werden. Dabei ist denkbar, dass die Halteeinrichtungen erst direkt vor einem Einführen der Welle die Funktionselemente so positionieren, dass deren Ausnehmungen auf einer gemeinsamen im Wesentlichen vertikalen Geraden liegen. Die Halteeinrichtungen können dabei gegen einen Anschlag oder Ähnliches fahren, wodurch eine höhere Positioniergenauigkeit erreicht werden kann. Weitere wichtige Merkmale und Vorteile der Erfindung ergeben sich aus den Unteransprüchen, aus den Zeichnungen und aus der zugehörigen Figurenbeschreibung anhand der Zeichnungen.
Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Ansprüche zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erste Vorrichtung zur Montage mehrere eine Ausnehmung für die Welle aufweisender Funktionselemente,
- Fig. 2: eine Darstellung wie in Fig. 1, jedoch in abgewandelter Form..

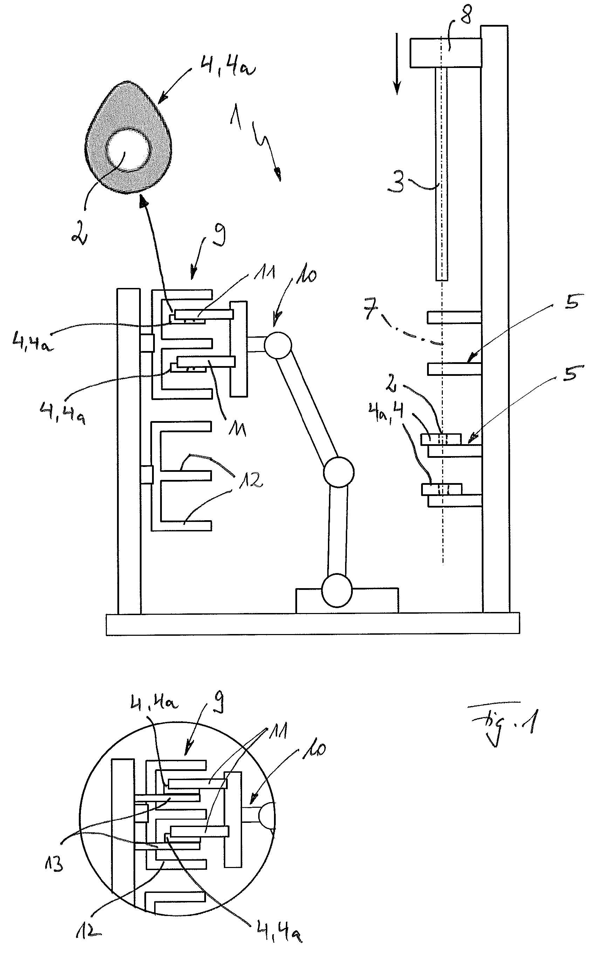

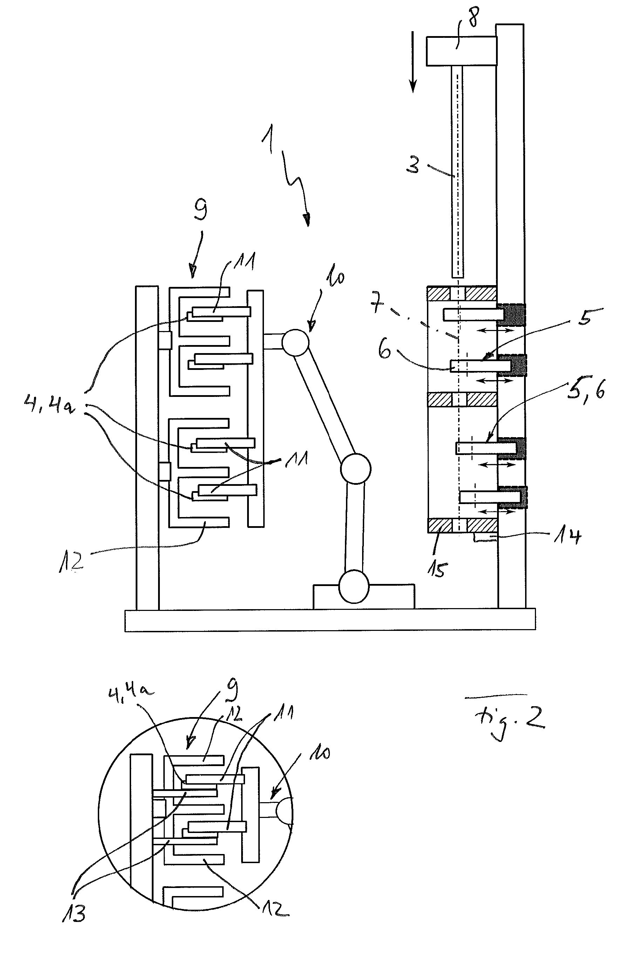

Entsprechend den Figuren 1 und 2, weist eine erfindungsgemäße Vorrichtung 1 zur Montage mehrerer eine Ausnehmung 2 für eine Welle 3 aufweisender Funktionselemente 4 in einer vorbestimmten Winkelposition auf der Welle 3 mehrere für jeweils ein Funktionselement 4 bestimmte Halteeinrichtungen 5 auf. Die Halteeinrichtungen 5 können dabei Aufnahmen aufweisen, die jeweils mit einer die Winkelposition des jeweiligen Funktionselements 4 entsprechend der Winkelposition auf der Welle 3 festlegenden Ausformung ausgestattet sind.
Die Ausformungen weisen vorzugsweise eine zumindest teilweise Negativkontur der Funktionselemente 4,4a aufweisen, so dass diese winkelgenau darin aufgenommen sind. Alternativ können die Halteeinrichtungen 5 auch Montagegreifer 6 aufweisen, die das jeweilige Funktionselement 4 während dem Fügen fixieren.

Die Halteeinrichtungen 5 sind vertikal übereinander angeordnet, so dass die Ausnehmungen der Funktionselemente 4 auf einer vertikalen Geraden 7 liegen. Darüber hinaus ist ein vertikal verfahrbarer Führungsschlitten 8 für die Welle 3 vorgesehen, so dass ein Fügen der Welle 3 mit den Funktionselementen 4 in vertikaler Richtung erfolgt. Dies bietet den besonderen Vorteil, dass sich die zu fügende Welle 3 bereits aufgrund der auf diese einwirkenden Schwerkraft selbst ausrichtet, so dass eine bisher beim horizontalen Fügen erforderliche aufwändige Ausrichtung vorzugsweise gänzlich entfallen kann.

Über eine separat angeordnete Heizeinrichtung 9 können zumindest zwei Funktionselemente 4 gleichzeitig erhitzt werden. Mit der in der Mitte angeordneten Greifeinrichtung 10 können zumindest zwei (vgl. Fig. 1), vorzugsweise sämtliche (vgl. Fig. 2), zu fügenden Funktionselemente 4, 4a gemeinsam aus der Heizeinrichtung 9 entnommen und in die Halteeinrichtungen 5 der Vorrichtung 1 eingelegt werden. Die Heizeinrichtung 9 besitzt dabei Haltebalkone 13, auf welchen die zu erhitzenden Funktionselemente 4,4a ablegbar sind, wobei die Haltebalkone 13 zumindest teilweise aus einem induktiv nicht erwärmbaren Werkstoff, insbesondere aus Keramik, ausgebildet oder kühlbar sind. Alternativ können die Funktionselemente 4, 4a während des Erhitzens auch von Greifern 11 der Greifeinrichtung 10 gehalten werden. Die Greifer 11 können ebenso wie die Montagegreifer 6 zumindest teilweise aus einem induktiv nicht erwärmbaren Werkstoff, insbesondere aus Keramik, ausgebildet oder kühlbar sein können.

Die Heizeinrichtung 9 kann zumindest zwei unabhängig voneinander steuerbare Induktionsspulen 12 aufweisen, so dass ein individuelles und bedarfsgerechtes Erhitzen unterschiedlicher Funktionselemente 4 möglich ist.

Zusätzlich kann die Vorrichtung 1 eine Einrichtung 14 zum Halten eines Lagerrahmen 15 für die Welle 3 aufweisen, wobei eine Positionierung des Lagerrahmens 15 relativ zur Vorrichtung 1 über zumindest zwei Positionierelemente, insbesondere Passstifte, derart erfolgen kann, dass eine Lagergasse des Lagerrahmens 15 fluchtend zu den Ausnehmungen 2 der einzelnen Funktionselemente 4 ist, so dass die Welle 3 einfach durch die Ausnehmungen 2 der Funktionselemente 4 und die dazu fluchtende Lagergasse des Lagerrahmens 15 geschoben werden kann.

Generell erfolgt ein thermisches Fügen der Welle 3 mit mehreren eine Ausnehmung 2 für die Welle 3 aufweisenden Funktionselementen 4, insbesondere Nocken 4a, Ausgleichsmassen, Zahnrädern und/oder Lager, mittels der zuvor beschriebenen Vorrichtung 1 wie folgt:
Zunächst werden zumindest zwei Funktionselemente 4 mit der Greifeinrichtung 10 gemeinsam in die Heizeinrichtung 9 eingelegt und in dieser erhitzt. Nach dem Erhitzen werden die zumindest zwei Funktionselemente 4 mit der Greifeinrichtung 10 gemeinsam aus der Heizeinrichtung 9 entnommen und in die Halteeinrichtungen 5 der Vorrichtung 1 eingelegt. Die Halteeinrichtungen 5 sind oder werden so positioniert, dass die Ausnehmungen 2 der Funktionselemente 4 auf einer gemeinsamen im Wesentlichen vertikalen Geraden 7 liegen. Mittels des vertikal verfahrbaren Führungsschlittens 8 wird nun die Welle 3 von oben durch die Ausnehmungen 2 der Funktionselemente 4 geschoben, woraufhin ein die Funktionselemente 4 auf der Welle 3 fixierender Temperaturausgleich abgewartet wird. Abschließend kann die Welle 3 samt darauf fixierter Funktionselemente 4 aus der Vorrichtung 1 entnommen werden.

Soll noch ein Lagerrahmen 15 oder eine nicht näher beschrieben Zylinderkopfhaube mit montiert werden, so wird diese vor dem Einfahren der Welle 3 mittels der Einrichtung 14 in Position gehalten und zwar so, dass deren Lagergasse fluchtend zu den Ausnehmungen 2 der Funktionselemente 4 angeordnet ist. Die die Halteeinrichtungen 5 können dabei auch erst direkt vor einem Einführen der Welle 3 die Funktionselemente 4 so positionieren, dass deren Ausnehmungen 2 auf einer gemeinsamen im Wesentlichen vertikalen Geraden 7 liegen.

Mit der erfindungsgemäßen Vorrichtung 1 und mit dem erfindungsgemäßen Verfahren lässt sich das thermische Fügen von Funktionselementen 4 auf Wellen 3 deutlich vereinfachen, da durch das vertikale Fügen ein bisher erforderliches aufwändiges Ausrichten der Welle 3 nunmehr hauptsächlich von der Schwerkraft übernommen wird und somit nicht mehr zusätzlich manuell aufwändig erfolgen muss. Durch die separate Heizeinrichtung 9 kann die Zugänglichkeit und damit auch die Wartungsfreundlichkeit der Vorrichtung 1 gesteigert werden. Durch die Greifeinrichtung 10 kann trotzdem ein vollautomatisches Fügen erfolgen.

## Patentansprüche

1. Vorrichtung (1) zur Montage von einem Verbund, bestehend aus mehreren eine Ausnehmung (2) für eine Welle (3) aufweisender Funktionselemente (4), in einer vorbestimmten Winkelposition auf der Welle (3), wobei die Vorrichtung (1) mehrere für die Aufnahme jeweils eines Funktionselements (4) bestimmte Halteeinrichtungen (5) aufweist,
wobei
- die Halteeinrichtungen (5) vertikal übereinander angeordnet sind, so dass die Ausnehmungen (2) der Funktionselemente (4) auf einer vertikalen Geraden (7) liegen,
- ein vertikal verfahrbarer Führungsschlitten (8) für die Welle (3) vorgesehen ist, so dass ein Fügen der Welle (3) mit den Funktionselementen (4) in vertikaler Richtung erfolgt,
- eine separat angeordnete Heizeinrichtung (9) vorgesehen ist, mittels welcher zumindest zwei Funktionselemente (4) gleichzeitig erhitzbar sind,
**dadurch gekennzeichnet**
- **dass** eine Greifeinrichtung (10) vorgesehen ist, mit der zumindest zwei, vorzugsweise sämtliche, zu fügenden Funktionselemente (4) gemeinsam aus der Heizeinrichtung (9) entnehmbar und in die Halteeinrichtungen (5) der Vorrichtung (1) einlegbar sind.

2. Vorrichtung nach Anspruch 1,
**dadurch gekennzeichnet,**
**dass** die Halteeinrichtungen (5) ausgebildet sind als,
- Aufnahmen, die jeweils mit einer die Winkelposition des jeweiligen Funktionselements (4) entsprechend der Winkelposition auf der Welle (3) festlegenden Ausformung ausgestattet sind, oder
- Montagegreifer (6), die das jeweilige Funktionselement (4) während dem Fügen fixieren.

3. Vorrichtung nach Anspruch 1 oder 2,
**dadurch gekennzeichnet,**
**dass** Greifer (11) der Greifeinrichtung (10) und/oder die Montagegreifer (6) zumindest teilweise aus einem induktiv nicht erwärmbaren Werkstoff, insbesondere aus Keramik, ausgebildet oder kühlbar sind.

4. Vorrichtung nach einem der vorherigen Ansprüche,
**dadurch gekennzeichnet,**
**dass** die Heizeinrichtung (9) zumindest zwei unabhängig voneinander steuerbare Induktionsspulen (12) aufweist.

5. Vorrichtung nach einem der Ansprüche 2 bis 4,
**dadurch gekennzeichnet,**
**dass** die Ausformungen eine zumindest teilweise Negativkontur der Funktionselemente (4) aufweisen, so dass diese winkelgenau darin aufgenommen sind.

6. Vorrichtung nach einem der vorhergehenden Ansprüche,
**dadurch gekennzeichnet,**
**dass** die Vorrichtung (1) eine Einrichtung (14) zum Halten eines Lagerrahmens (15) oder einer Zylinderkopfhaube aufweist.

7. Vorrichtung nach einem der vorhergehenden Ansprüche,
**dadurch gekennzeichnet,**
**dass** die Heizeinrichtung (9) Haltebalkone (13) aufweist, auf welchen die zu erhitzenden Funktionselemente (4) ablegbar sind, wobei die Haltebalkone (13) zumindest teilweise aus einem induktiv nicht erwärmbaren Werkstoff, insbesondere aus Keramik, ausgebildet oder kühlbar sind.

8. Vorrichtung nach einem der vorhergehenden Ansprüche,
**dadurch gekennzeichnet,**
**dass** die einzelnen Halteeinrichtungen (5) beweglich sind, so dass sie mindestens zwei verschiedene Haltepositionen einnehmen können, wobei eine der mindestens zwei Haltepositionen die Halteeinrichtung (5) so positioniert, dass die Ausnehmungen (2) der Funktionselemente (4) auf einer vertikalen Geraden (7) liegen.

9. Vorrichtung nach einem der vorhergehenden Ansprüche,
**dadurch gekennzeichnet,**
**dass** die Funktionselemente (4) als Nocken (4a), Ausgleichsmassen, Zahnräder und/oder Lager ausgebildet sind.

10. Verfahren zum thermischen Fügen einer Welle (3) mit mehreren eine Ausnehmung (2) für die Welle (3) aufweisenden Funktionselementen (4) mittels einer Vorrichtung (1) nach einem der vorhergehenden Ansprüche, bei dem
- zumindest zwei Funktionselemente (4) mit der Greifeinrichtung (10) gemeinsam in die Heizeinrichtung (9) eingelegt werden,
- zumindest zwei Funktionselemente (4) in der Heizeinrichtung (9) erhitzt werden,
- die zumindest zwei Funktionselemente (4) mit der Greifeinrichtung (10) gemeinsam aus der Heizeinrichtung (9) entnommen und in die Halteeinrichtungen (5) der Vorrichtung (1) eingelegt werden,
- die Halteeinrichtungen (5) so positioniert werden, dass die Ausnehmungen (2) der Funktionselemente (4) auf einer gemeinsamen im Wesentlichen vertikalen Geraden (7) liegen,
- die Welle (3) mittels eines vertikal verfahrbaren Führungsschlittens (8) von oben durch die Ausnehmungen (2) der Funktionselemente (4) geschoben wird,
- ein die Funktionselemente (4) auf der Welle (3) fixierender Temperaturausgleich abgewartet wird,
- die Welle (3) samt darauf fixierter Funktionselemente (4) aus der Vorrichtung (1) entnommen wird.

11. Verfahren nach Anspruch 10,
**dadurch gekennzeichnet,**
**dass** die Halteeinrichtungen (5) erst direkt vor einem Einführen der Welle (3) die Funktionselemente (4) so positionieren, dass deren Ausnehmungen (2) auf einer gemeinsamen im Wesentlichen vertikalen Geraden (7) liegen.

## Claims

1. An apparatus (1) for assembling a composite arrangement, the apparatus comprising a plurality of functional elements (4) each having an aperture (2) for a shaft (3), in a predetermined angular position on the shaft (3), the apparatus (1) comprising a plurality of retaining devices (5) each intended for accommodating a functional element (4), wherein
- the retaining devices (5) are arranged vertically one above another such that the apertures (2) of the functional elements (4) lie on a vertical line (7),
- a vertically movable guide slide (8) for the shaft (3) is provided, so that a joining of the shaft (3) with the functional elements (4) takes place in a vertical direction,
- a separate heating device (9) is provided by which at least two functional elements (4) are able to be heated simultaneously,
**characterized in that**
- a gripping device (10) is provided by which at least two, preferably all, functional elements (4) which are to be joined are able to be removed together from the heating device (9) and introduced into the retaining devices (5) of the apparatus (1).

2. The apparatus according to claim 1,
**characterized in that** the retaining devices (5) are formed as
- mounts each having a moulding fixing the angular position of the respective functional element (4) corresponding to the angular position on the shaft (3), or
- assembly grippers (6) fixing the respective functional element (4) during the joining operation.

3. The apparatus according to claim 1 or 2,
**characterized in that**
grippers (11) of the gripping device (10) and/or the assembly grippers (6) are constructed at least partially from a material, in particular ceramic, which is not able to be heated inductively, or are able to be cooled.

4. The apparatus according to any of the preceding claims,
**characterized in that**
the heating device (9) comprises at least two induction coils (12) which are able to be controlled independently of one another.

5. The apparatus according to any of claims 2 to 4,
**characterized in that**
the mouldings have an at least partial negative contour of the functional elements (4), so that the functional elements are able to be received therein at a precise angle.

6. The apparatus according to any of the preceding claims,
**characterized in that**
the apparatus (1) comprises a device (14) for holding a bearing frame (15) or a cylinder head cover.

7. The apparatus according to any of the preceding claims,
**characterized in that**
the heating device (9) has retaining balconies (13), on which the functional elements (4) which are to be heated are able to be deposited, wherein the retaining balconies (13) are constructed at least partially from a material, in particular ceramic, which is not able to be heated inductively, or are able to be cooled.

8. The apparatus according to any of the preceding claims,
**characterized in that**
the retaining devices (5) are individually movable, so that they can assume at least two different retaining positions in at least one of which the retaining device (5) is positioned so that the apertures (2) of the functional elements (4) lie on a vertical line (7).

9. The apparatus according to any of the preceding claims,
**characterized in that**
the functional elements (4) are formed as cams (4a), balancing masses, gear wheels and/or bearings.

10. A method for the thermal joining of a shaft (3) with several functional elements (4) each having an aperture (2) for the shaft (3), the method using an apparatus (1) according to any of the preceding claims, wherein
- at least two functional elements (4) are introduced together into a heating device (9) by a gripping device (10),
- at least two functional elements (4) are heated by the heating device (9),
- at least two functional elements (4) are removed together from the heating device (9) by the gripping device (10) and positioned into retaining devices (5) of the apparatus (1),
- the retaining devices (5) are positioned so that the apertures (2) of the functional elements (4) lie on a shared substantially vertical line (7),
- the shaft (3) is pushed from above through the apertures (2) of the functional elements (4) by a vertically movable guide slide (8),
- the function elements (4) on the shaft (3) are fixed via a temperature equalisation fixing,
- the shaft (3) together with functional elements (4) fixed thereon is removed from the apparatus (1).

11. The method according to claim 10,
**characterized in that**
the retaining devices (5) are positioned so that the apertures (2) of the functional elements (4) lie on the substantially vertical line (7) only directly before pushing of the shaft (3) through the apertures.

## Revendications

1. Dispositif (1) servant au montage d'un composte, constitué de plusieurs éléments fonctionnels (4) présentant un évidement (2) pour un arbre (3), dans une position angulaire prédéfinie sur l'arbre (3), le dispositif (1) présentant plusieurs systèmes de maintien (5) se destinant à la réception respectivement d'un élément fonctionnel (4),
- les systèmes de maintien (5) étant disposés les uns au-dessus des autres de manière verticale de sorte que les évidements (2) des éléments fonctionnels (4) se situent sur une droite (7) verticale,
- un chariot de guidage (8) pouvant être déplacé de manière verticale étant prévu pour l'arbre (3) si bien qu'un assemblage de l'arbre (3) et des éléments fonctionnels (4) a lieu dans une direction verticale,
- un système de chauffage (9) disposé de manière séparée étant prévu, au moyen duquel au moins deux éléments fonctionnels (4) peuvent être chauffés de manière simultanée,
**caractérisé en ce**
- **qu'**un système de préhension (10) est prévu, à l'aide duquel au moins deux éléments fonctionnels (4) à assembler, de préférence leur totalité, peuvent être retirés conjointement hors du système de chauffage (9) et peuvent être insérés dans les systèmes de maintien (5) du dispositif (1).

2. Dispositif selon la revendication 1,
**caractérisé en ce**
**que** les systèmes de maintien (5) sont réalisés sous la forme
- de logements, qui sont équipés respectivement d'une déformation déterminant la position angulaire de l'élément fonctionnel (4) respectif de manière correspondante à la position angulaire sur l'arbre (3), ou
- d'éléments de préhension de montage (6), qui fixent l'élément fonctionnel (4) respectif au cours de l'assemblage.

3. Dispositif selon la revendication 1 ou 2,
**caractérisé en ce**
**que** les éléments de préhension (11) du système de préhension (10) et/ou les éléments de préhension de montage (6) sont réalisés au moins en partie à partir
d'un matériau ne pouvant pas être réchauffé par induction, en particulier à partir de céramique, ou peuvent être refroidis.

4. Dispositif selon l'une quelconque des revendications précédentes,
**caractérisé en ce**
**que** le système de chauffage (9) présente au moins deux bobines à induction (12) pouvant être commandées indépendamment l'une de l'autre.

5. Dispositif selon l'une quelconque des revendications 2 à 4,
**caractérisé en ce**
**que** les déformations présentent un contour au moins en partie négatif des éléments fonctionnels (4) de sorte que ces derniers y sont reçus selon un angle précis.

6. Dispositif selon l'une quelconque des revendications précédentes,
**caractérisé en ce**
**que** le dispositif (1) présente un système (14) servant à maintenir un cadre de palier (15) ou un capot de tête de cylindre.

7. Dispositif selon l'une quelconque des revendications précédentes,
**caractérisé en ce**
**que** le système de chauffage (9) présente des balcons de maintien (13), sur lesquels les éléments fonctionnels (4) à réchauffer peuvent être déposés, les balcons de maintien (13) étant réalisés au moins en partir à partir d'un matériau ne pouvant être réchauffé par induction, en particulier à partir de céramique, ou pouvant être refroidis.

8. Dispositif selon l'une quelconque des revendications précédentes,
**caractérisé en ce**
**que** les divers systèmes de maintien (5) sont mobiles si bien qu'ils peuvent adopter au moins deux positions de maintien différentes, une des deux positions de maintien ou plus positionnant le système de maintien (5) de telle manière que les évidements (2) des éléments fonctionnels (4) se trouvent sur une droite (7) verticale.

9. Dispositif selon l'une quelconque des revendications précédentes,
**caractérisé en ce**
**que** les éléments fonctionnels (4) sont réalisés sous la forme de cames (4a), de poids d'équilibrage, de roues dentées et/ou de paliers.

10. Procédé servant à assembler thermiquement un arbre (3) avec plusieurs éléments fonctionnels (4) présentant un évidement (2) pour l'arbre (3) au moyen d'un dispositif (1) selon l'une quelconque des revendications précédentes, dans lequel
- au moins deux éléments fonctionnels (4) sont placés à l'intérieur du système de chauffage (9) conjointement avec le système de préhension (10),
- au moins deux éléments fonctionnels (4) sont chauffés dans le système de chauffage (9),
- les deux éléments fonctionnels (4) ou plus sont retirés, conjointement avec le système de préhension (10) hors du système de chauffage (9) et sont placés à l'intérieur des systèmes de maintien (5) du dispositif (1),
- les systèmes de maintien (5) sont positionnés de telle manière que les évidements (2) des éléments fonctionnels (4) se trouvent sur une droite (7) commune sensiblement verticale,
- l'arbre (3) est poussé au moyen d'un chariot de guidage (8) pouvant être déplacé de manière verticale depuis le haut à travers les évidements (2) des éléments fonctionnels (4),
- un équilibrage de température fixant les éléments fonctionnels (4) sur l'arbre (3) est attendu,
- l'arbre (3), y compris les éléments fonctionnels (4) fixés sur ce dernier, est retiré du dispositif (1).

11. Procédé selon la revendication 10,
**caractérisé en ce**
**que** les systèmes de maintien (5) positionnent, seulement directement avant une introduction de l'arbre (3), les éléments fonctionnels (4) de telle manière que les évidements (2) de ces derniers se trouvent sur une droite (7) commune sensiblement verticale.
